(19) Europäisches Patentamt
European Patent Office
Office européen des brevets

(11) **EP 4 116 337 B1**

(12) **EUROPEAN PATENT SPECIFICATION**

(45) Date of publication and mention
of the grant of the patent:
**22.04.2026 Bulletin 2026/17**

(21) Application number: **22177471.4**

(22) Date of filing: **07.06.2022**

(51) International Patent Classification (IPC):
*C08C 19/20* (2006.01)  *C08C 19/22* (2006.01)
*C08K 3/36* (2006.01)  *C08K 5/40* (2006.01)
*C08L 9/00* (2006.01)  *C08L 17/00* (2006.01)
*B60C 1/00* (2006.01)  *C08K 3/22* (2006.01)

(52) Cooperative Patent Classification (CPC):
(C-Sets available)
**C08L 9/00; B60C 1/00; B60C 1/0016; C08C 19/20;
C08C 19/22; C08L 15/00;** C08L 17/00; Y02T 10/86
(Cont.)

(54) **RUBBER COMPOSITION AND TIRE**

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2021 JP 2021112768**

(43) Date of publication of application:
**11.01.2023 Bulletin 2023/02**

(73) Proprietor: **Sumitomo Rubber Industries, Ltd.
Kobe-shi, Hyogo 651-0072 (JP)**

(72) Inventor: **YAJIMA, Ryo
Kobe-shi, 651-0072 (JP)**

(74) Representative: **TBK
Bavariaring 4-6
80336 München (DE)**

(56) References cited:
**EP-A1- 3 722 360     EP-A1- 3 865 313
EP-A2- 2 947 116     JP-A- 2021 126 938
US-A1- 2005 085 583**

• **DATABASE WPI Week 201916, Derwent World
Patents Index; AN 2019-18048U, XP002808108**
• **MANDAL SWAPAN KUMAR ET AL: "Reclaiming
of ground rubber tire by safe multifunctional
rubber additives: I. Tetra benzyl thiuram
disulfide", RUBBER CHEMISTRY AND
TECHNOLOGY, AMERICAN CHEMICAL
SOCIETY, RUBBER DIVISION, US, vol. 85, no. 4, 1
January 2012 (2012-01-01), pages 629 - 644,
XP009189577, ISSN: 0035-9475, DOI: 10.5254/
RCT.12.88949**
• **DE D ET AL: "Reclaiming of ground rubber tire
(GRT) by a novel reclaiming agent", EUROPEAN
POLYMER JOURNAL, PERGAMON PRESS LTD
OXFORD, GB, vol. 42, no. 4, 1 April 2006
(2006-04-01), pages 917 - 927, XP028029943,
ISSN: 0014-3057, [retrieved on 20060401], DOI:
10.1016/J.EURPOLYMJ.2005.10.003**
• **DATABASE WPI Week 201661, Derwent World
Patents Index; AN 2016-35446L, XP002808112**

Remarks:
The file contains technical information submitted
after the application was filed and not included in this
specification

(52) Cooperative Patent Classification (CPC): (Cont.)

C-Sets
**C08L 15/00, C08L 9/00, C08K 3/36**

**Description**

TECHNICAL FIELD

The present invention relates to a rubber composition and a tire.

BACKGROUND ART

Rubber compositions for use in applications such as tires require various properties such as abrasion resistance and fuel economy, and it is desirable to improve these properties.

JP 2019-026757 A discloses a rubber composition for tire comprising silica, a powder recycled rubber, and a modified recycled rubber blended with a diene-based rubber comprising isoprene rubber and styrene butadiene rubber.

SUMMARY OF INVENTION

TECHNICAL PROBLEM

The present invention aims to solve the above problem and provide a rubber composition and a tire which provide improved overall performance including excellent abrasion resistance and fuel economy during high speed running.

SOLUTION TO PROBLEM

The present invention relates to a tire, including a rubber composition,

the rubber composition containing: rubber components including an isoprene-based rubber and a polybutadiene rubber; silica; and a modified rubber material functionalized with a thiuram sulfide compound,
the rubber composition having a silica content of 30 to 150 parts by mass per 100 parts by mass of the rubber components,
the rubber composition satisfying the following relationship (1) with respect to an isoprene-based rubber content by mass and a polybutadiene rubber content by mass: (1) Isoprene-based rubber content > Polybutadiene rubber content.

DESCRIPTION OF EMBODIMENTS

The rubber composition of the present invention contains rubber components including an isoprene-based rubber and a polybutadiene rubber (BR), silica, and a modified rubber material functionalized with a thiuram sulfide compound, has a predetermined silica content, and satisfies relationship (1). Such a rubber composition provides improved overall performance including excellent abrasion resistance and fuel economy during high speed running.

The mechanism (reason) for this advantageous effect is not clear, but is believed to be as follows.

In general, the rubber is subjected to a high deformation rate during high speed running. Thus, it is considered that, if non-uniform portions appear in the system, conformity to deformation in the portions is impaired, leading to fracture of the rubber and therefore deteriorated abrasion resistance.

Since, according to the present invention, a modified rubber material functionalized with a highly reactive thiuram sulfide compound is added to a rubber mixture containing an isoprene-based rubber and a polybutadiene rubber, the modified rubber material is more likely to be incorporated into the unsaturated isoprene-based rubber/polybutadiene rubber phase, and also a higher crosslinking reactivity with the polymers is obtained. Thus, the formation of bonds (e.g., covalent bonds) between the modified rubber material and the polymers is promoted, thereby preventing the modified rubber material from forming fracture nuclei.

Moreover, silica is more likely to be localized in the isoprene-based rubber phase. However, when the rubber composition is adjusted to "Isoprene-based rubber content > Polybutadiene rubber content", the silica is prevented from forming fracture nuclei; in addition, the modified rubber material first reacts with the isoprene-based rubber and the isoprene-based rubber phase more rapidly reaches saturation, so that the silica is less likely to enter the isoprene-based rubber phase and localization of the silica in the isoprene-based rubber is inhibited.

Furthermore, since the rubber composition is adjusted to "Isoprene-based rubber content > Polybutadiene rubber content", the polybutadiene rubber phase having excellent flex crack resistance is present as islands in the isoprene-based rubber phase, thereby improving abrasion resistance during high speed running.

Thus, it is considered that, even if non-uniform portions appear in the system during high speed running where the rubber is subjected to a high deformation rate, conformity to deformation in the portions is ensured, resulting in a decrease in the number of fracture nuclei; moreover, localization of silica is inhibited to promote uniform dispersion of silica, thereby imparting excellent abrasion resistance during high speed running. Further, excellent fuel economy during high speed running is simultaneously obtained. Therefore, it is believed that the overall performance in terms of abrasion resistance and fuel economy during high speed running can be significantly improved.

Examples of isoprene-based rubbers that may be used in the rubber composition include natural rubbers (NR), polyisoprene rubbers (IR), refined NR, modified NR, and modified IR. Examples of NR include those commonly used in the rubber industry, such as SIR20, RSS#3, and TSR20. Any IR may be used including for example those commonly used in the rubber industry, such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

Any BR may be used. Examples include high-cis BR having a high cis content, BR containing syndiotactic polybutadiene crystals, and BR synthesized using rare earth catalysts (rare earth-catalyzed BR). In particular, high-cis BR having a cis content of 90% or higher is preferred in order to improve abrasion resistance. These may be used alone or in combinations of two or more.

The BR may be either unmodified or modified BR.

The modified BR may be any BR having a functional group interactive with a filler such as silica. Examples include chain end-modified BR obtained by modifying at least one chain end of BR with a compound (modifier) having the functional group (i.e., chain end-modified BR terminated with the functional group); backbone-modified BR having the functional group in the backbone; backbone- and chain end-modified BR having the functional group in both the backbone and chain end (e.g., backbone- and chain end-modified BR in which the backbone has the functional group and at least one chain end is modified with the modifier); and chain end-modified BR into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxy, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The BR may be commercially available from, for example, Ube Industries, Ltd., JSR Corporation, Asahi Kasei Corporation, Zeon Corporation, etc.

The rubber composition satisfies the following relationship (1) with respect to the isoprene-based rubber content (the amount (% by mass) of isoprene-based rubbers based on 100% by mass of the rubber components) and the polybutadiene rubber content (the amount (% by mass) of polybutadiene rubbers based on 100% by mass of the rubber components) :

Isoprene-based rubber content > Polybutadiene rubber content.                (1)

To better achieve the advantageous effect, the rubber composition desirably satisfies the following relationship with respect to the isoprene-based rubber content and the polybutadiene rubber content:
Isoprene-based rubber content/Polybutadiene rubber content ≥ 1.5.

The ratio of "Isoprene-based rubber content/Polybutadiene rubber content" is preferably 2.0 or higher, more preferably 2.3 or higher, still more preferably 2.8 or higher, particularly preferably 3.0 or higher. The upper limit is preferably 6.0 or lower, more preferably 5.0 or lower, still more preferably 4.5 or lower, particularly preferably 4.0 or lower. When the ratio is within the range indicated above, the advantageous effect tends to be better achieved.

In the rubber composition, the amount of isoprene-based rubbers based on 100% by mass of the rubber components is preferably 50% by mass or more, more preferably 60% by mass or more, still more preferably 70% by mass or more, particularly preferably 75% by mass or more. The upper limit is preferably 95% by mass or less, more preferably 90% by mass or less, still more preferably 85% by mass or less. When the amount is within the range indicated above, the advantageous effect tends to be better achieved.

In the rubber composition, the amount of BR based on 100% by mass of the rubber components is preferably 5% by mass or more, more preferably 10% by mass or more, still more preferably 15% by mass or more, particularly preferably 20% by mass or more. The upper limit is preferably 45% by mass or less, more preferably 40% by mass or less, still more preferably 30% by mass or less, particularly preferably 25% by mass or less. When the amount is within the range indicated above, the advantageous effect tends to be better achieved.

In the rubber composition, the combined amount of isoprene-based rubbers and BR based on 100% by mass of the rubber components is preferably 60% by mass or more, more preferably 80% by mass or more, still more preferably 90% by mass or more, particularly preferably 95% by mass or more, and may be 100% by mass. When the combined amount is within the range indicated above, the advantageous effect tends to be better achieved.

The rubber composition may contain rubber components other than isoprene-based rubbers and BR. Examples of such other rubber components include other diene rubbers. Examples of such other diene rubbers include styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more.

Examples of silica that may be used in the rubber composition include dry silica (anhydrous silica) and wet silica (hydrous silica). Wet silica is preferred among these because it has a large number of silanol groups.

In the rubber composition, the amount of silica per 100 parts by mass of the rubber components is 30 parts by mass or more, preferably 50 parts by mass or more, more preferably 80 parts by mass or more, still more preferably 90 parts by mass or more, particularly preferably 100 parts by mass or more. The upper limit is 150 parts by mass or less, preferably 140 parts by mass or less, more preferably 130 parts by mass or less, still more preferably 120 parts by mass or less. When the amount is within the range indicated above, the advantageous effect tends to be better achieved.

The nitrogen adsorption specific surface area ($N_2SA$) of the silica is preferably 50 $m^2$/g or more, more preferably 100 $m^2$/g or more, still more preferably 150 $m^2$/g or more. The $N_2SA$ of the silica is also preferably 250 $m^2$/g or less, more preferably 220 $m^2$/g or less, still more preferably 200 $m^2$/g or less. When the $N_2SA$ is within the range indicated above, the advantageous effect tends to be better achieved.

The $N_2SA$ of the silica is measured by a BET method in accordance with ASTM D3037-93.

The silica may be commercially available from, for example, Degussa, Rhodia, Tosoh Silica Corporation, Solvay Japan, Tokuyama Corporation, etc.

The rubber composition preferably contains a silane coupling agent with silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, and bis(3-triethoxysilylpropyl)disulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane and 3-chloropropyltriethoxysilane. To better achieve the advantageous effect, sulfide silane coupling agents are preferred among these.

The silane coupling agents may be commercially available from, for example, Degussa, Momentive, Shin-Etsu Silicone, Tokyo Chemical Industry Co., Ltd., AZmax. Co., Dow Corning Toray Co., Ltd., etc.

In the rubber composition, the amount of silane coupling agents per 100 parts by mass of the silica is preferably 3 parts by mass or more, more preferably 5 parts by mass or more, still more preferably 8 parts by mass or more, but is preferably 25 parts by mass or less, more preferably 20 parts by mass or less, still more preferably 15 parts by mass or less. When the amount is within the range indicated above, the advantageous effect tends to be better achieved.

Examples of fillers other than silica that may be used in the rubber composition include those known in the rubber field, such as carbon black, calcium carbonate, talc, alumina, clay, aluminum hydroxide, aluminum oxide, and mica. Carbon black is preferred among these.

In the rubber composition, the amount (total amount) of fillers per 100 parts by mass of the rubber components is preferably 50 parts by mass or more, more preferably 70 parts by mass or more, still more preferably 90 parts by mass or more, particularly preferably 105 parts by mass or more. The upper limit is preferably 150 parts by mass or less, more preferably 140 parts by mass or less, still more preferably 130 parts by mass or less. When the amount is within the range indicated above, the advantageous effect tends to be better achieved.

The percentage of silica based on 100% by mass of the fillers in the rubber composition is preferably 60% by mass or higher, more preferably 80% by mass or higher, still more preferably 90% by mass or higher, particularly preferably 95% by mass or higher. The upper limit is not limited, but is preferably 99% by mass or lower, more preferably 98% by mass or lower, still more preferably 97% by mass or lower. When the percentage is within the range indicated above, the advantageous effect tends to be better achieved.

Non-limiting examples of carbon black that may be used in the rubber composition include GPF, FEF, HAF, ISAF, and SAF. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area ($N_2SA$) of the carbon black is preferably 20 $m^2$/g or more, more preferably 50 $m^2$/g or more, still more preferably 70 $m^2$/g or more. The upper limit of the $N_2SA$ of the carbon black is not limited, but is preferably 150 $m^2$/g or less, more preferably 130 $m^2$/g or less, still more preferably 120 $m^2$/g or less. When the $N_2SA$ is within the range indicated above, the advantageous effect tends to be better achieved.

In the rubber composition, the amount of carbon black per 100 parts by mass of the rubber components is preferably 5 parts by mass or more, more preferably 30 parts by mass or more, still more preferably 50 parts by mass or more, further preferably 65 parts by mass or more, particularly preferably 70 parts by mass or more. The amount of carbon black is also preferably 150 parts by mass or less, more preferably 120 parts by mass or less, still more preferably 100 parts by mass or less, particularly preferably 90 parts by mass or less. When the amount is within the range indicated above, the advantageous effect tends to be better achieved.

The modified rubber material functionalized with a thiuram sulfide compound used in the rubber composition is not limited and may be any rubber material modified with a thiuram sulfide compound. In particular, the modified rubber material is desirably a modified diene rubber material functionalized with a thiuram sulfide compound.

Herein, the term "modified rubber material functionalized with a thiuram sulfide compound" does not correspond to the above-described rubber component.

Non-limiting examples of the thiuram sulfide compound include alkyl thiuram sulfides, aryl thiuram sulfides, heterocyclic thiuram sulfides, thiuram disulfides, thiuram polysulfides, tetrabenzyl thiuram disulfides, tetraalkyl thiuram disulfides, tetramethyl thiuram disulfides, tetraethyl thiuram disulfides, and dipentamethyl thiuram monosulfides. These may be used alone or in combinations of two or more.

Non-limiting examples of the rubber (backbone-forming rubber) functionalized with the thiuram sulfide compound include the above-mentioned rubber components such as diene rubbers.

In view of life cycle assessment (LCA), the modified rubber material functionalized with a thiuram sulfide compound may suitably be a modified reclaimed rubber. Herein, the term "modified reclaimed rubber" refers to a rubber material obtained by crushing a part of a used rubber product (waste rubber product) such as a tire, followed by desulfurization and then functionalization with a thiuram sulfide compound. When the modified reclaimed rubber functionalized with a thiuram sulfide compound is used, the advantageous effect tends to be better achieved.

The modified reclaimed rubber is an advantageous material for ameliorating possible problems associated with the use of recycled materials, such as a decrease in reinforcement, because the crosslinks in the rubber are partially cut by desulfurization and functionalization, so that the rubber has a higher reactivity. The modified reclaimed rubber may be prepared, for example, by functionalizing with a modifying compound (introducing a modifying compound into) a reclaimed rubber or vulcanized rubber powder (powdered rubber) that has a reactive functional group in an unvulcanized diene rubber. Non-limiting examples of the reclaimed rubber used here include crushed rubbers having been mechanically crushed at room temperature or in a frozen state, desulfurized rubbers obtained by further desulfurizing these rubbers, reclaimed rubbers obtained by recycling used rubbers of automobile tires, tubes, or other rubber products set forth in JIS K6313, or other rubbers, and reclaimed rubbers having comparable properties to the foregoing reclaimed rubbers.

The modified reclaimed rubber may be commercially available from Lehigh Technologies, etc.

To better achieve the advantageous effect, the modified rubber material preferably has a diene portion (diene monomer units) having a degree of modification with a thiuram sulfide compound of 5.0% or higher. The degree of modification is more preferably 7.0% or higher, still more preferably 9.0% or higher, particularly preferably 10.0% or higher. The upper limit is not limited, but is preferably 30.0% or lower, more preferably 25.0% or lower, still more preferably 20.0% or lower.

The mechanism (reason) why this advantageous effect is achieved by increasing the degree of modification, in particular, by adjusting the degree of modification to 5.0% or higher is not clear, but is believed to be as follows.

As described above, when the modified rubber material is mixed with rubber components including an isoprene-based rubber and a polybutadiene rubber, the formation of bonds between the modified rubber material and the polymers is promoted. Then, increasing the degree of modification of the modified rubber material increases the number of reactive sites between the modified rubber material and the polymers to further promote the reaction. Accordingly, it is believed that the overall performance in terms of abrasion resistance and fuel economy during high speed running is further improved.

In the rubber composition, the amount of such modified rubber materials functionalized with thiuram sulfide compounds per 100 parts by mass of the rubber components is preferably 5 parts by mass or more, more preferably 20 parts by mass or more, still more preferably 25 parts by mass or more, particularly preferably 30 parts by mass or more. The amount is also preferably 80 parts by mass or less, more preferably 60 parts by mass or less, still more preferably 50 parts by mass or less, particularly preferably 45 parts by mass or less. When the amount is within the range indicated above, the advantageous effect tends to be better achieved.

The rubber composition may contain a powdered reclaimed rubber. The term "powdered reclaimed rubber" refers to a material which is selected from crushed rubbers having been mechanically crushed at room temperature or in a frozen state, desulfurized rubbers obtained by further desulfurizing the these rubbers, reclaimed rubbers obtained by recycling used rubbers of automobile tires, tubes, or other rubber products set forth in JIS K6313, or other rubbers, and reclaimed rubbers having comparable properties to the foregoing reclaimed rubbers and which has not undergone any modification treatment such as desulfurization or functionalization.

Herein, the term "powdered reclaimed rubber" does not correspond to the above-described rubber component. Moreover, the term "modified rubber material functionalized with a thiuram sulfide compound" does not correspond to the above-described powdered reclaimed rubber.

When the rubber composition contains one or more powdered reclaimed rubbers, the amount of the powdered reclaimed rubbers per 100 parts by mass of the rubber components is preferably 3 parts by mass or more, more preferably 6 parts by mass or more, still more preferably 8 parts by mass or more, particularly preferably 10 parts by mass or more. The amount is also preferably 50 parts by mass or less, more preferably 30 parts by mass or less, still more preferably 15 parts by mass or less, particularly preferably 13 parts by mass or less.

The rubber composition may contain a plasticizer.

Herein, the term "plasticizer" refers to a material that can impart plasticity to rubber components, and conceptionally includes liquid plasticizers (plasticizers which are liquid at 25°C) and solid plasticizers (plasticizers which are solid at 25°C). Specifically, it is, for example, a component that can be extracted with acetone from the rubber composition thereof. These may be used alone or in combinations of two or more.

In the rubber composition, the total amount of plasticizers (the combined amount of liquid plasticizers and solid plasticizers) per 100 parts by mass of the rubber components is preferably 5.0 parts by mass or more, more preferably 8.0 parts by mass or more, still more preferably 10.0 parts by mass or more, particularly preferably 12.0 parts by mass or more. The upper limit is preferably 50.0 parts by mass or less, more preferably 30.0 parts by mass or less, still more preferably 20.0 parts by mass or less. When the total amount is within the range indicated above, the advantageous effect tends to be better achieved.

Here, the amount of plasticizers includes the amount of the oils contained in the rubbers (oil extended rubbers), sulfur (oil-containing sulfur), or other materials, if used.

Examples of liquid plasticizers include oils, liquid polymers (e.g., diene polymers, olefin polymers, ester polymers), liquid resins, essential oils from natural sources, such as turpentine oil, and ester plasticizers. Examples of solid plasticizers include solid resins which are solid at 25°C, such as those generally used in the tire industry. These may be used alone or in combinations of two or more. Preferred among these are oils, liquid polymers, and liquid resins, with oils being more preferred, with process oils being still more preferred.

Non-limiting examples of oils include conventionally known oils, including process oils such as paraffinic process oils, aromatic process oils, and naphthenic process oils, low polycyclic aromatic (PCA) process oils such as TDAE and MES, plant oils, and mixtures thereof. These may be used alone or in combinations of two or more. Paraffinic process oils are preferred among these.

The oils may be commercially available from, for example, Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

Examples of liquid resins include resins which are liquid at 25°C, such as terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins.

The liquid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group.

The liquid diene polymers may be commercially available from Sartomer, Kuraray Co., Ltd., etc.

In the rubber composition, the amount of liquid plasticizers (preferably oils) per 100 parts by mass of the rubber components is preferably 5.0 parts by mass or more, more preferably 8.0 parts by mass or more, still more preferably 10.0 parts by mass or more, particularly preferably 12.0 parts by mass or more. The upper limit is preferably 50.0 parts by mass or less, more preferably 30.0 parts by mass or less, still more preferably 20.0 parts by mass or less. When the amount is within the range indicated above, the advantageous effect tends to be better achieved.

Here, the amount of liquid plasticizers includes the amount of the oils contained in the rubbers (oil extended rubbers), sulfur (oil-containing sulfur), or other materials, if used.

Examples of solid plasticizers include solid resins generally used as compounding ingredients for tires. Specific examples include terpene resins, rosin resins, styrene resins, olefin resins, C5 resins, C9 resins, C5/C9 resins, coumarone resins, indene resins, coumarone-indene resins, acrylic resins, and urethane resins. These resins may be used alone, or two or more of them may be used in admixture. Moreover, the resins themselves may be copolymers of multiple types of monomer components.

The solid plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The softening point of the solid plasticizers is preferably 30°C or higher, more preferably 50°C or higher, still more preferably 80°C or higher, but is preferably 200°C or lower, more preferably 160°C or lower, still more preferably 140°C or lower, particularly preferably 120°C or lower. When the softening point is within the range indicated above, the advantageous effect tends to be more suitably achieved.

Herein, the softening point of the solid plasticizers is determined in accordance with JIS K 6220-1:2001 using a ring and ball softening point measuring apparatus and defined as the temperature at which the ball drops down.

When the rubber composition contains one or more solid plasticizers (preferably resins), the amount of the solid plasticizers per 100 parts by mass of the rubber components is preferably 5.0 parts by mass or more, more preferably 8.0 parts by mass or more, still more preferably 10.0 parts by mass or more, particularly preferably 12.0 parts by mass or more. The upper limit is preferably 50.0 parts by mass or less, more preferably 30.0 parts by mass or less, still more preferably 20.0 parts by mass or less. When the amount is within the range indicated above, the advantageous effect tends to be better achieved.

To better achieve the advantageous effect, the rubber composition preferably contains zinc oxide. The zinc oxide used may be a conventional one. Usable commercial products are available from, for example, Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

In the rubber composition, the amount of zinc oxide per 100 parts by mass of the rubber components is preferably 1.0 parts by mass or more, more preferably 1.5 parts by mass or more, still more preferably 2.0 parts by mass or more, particularly preferably 2.5 parts by mass or more, in order to better achieve the advantageous effect. The upper limit is not limited, but is preferably 10.0 parts by mass or less, more preferably 7.0 parts by mass or less, still more preferably 5.0 parts by mass or less. When the amount is within the range indicated above, the advantageous effect tends to be better achieved.

The mechanism (reason) why this advantageous effect is achieved by increasing the amount of zinc oxide, in particular, by adjusting the amount to 2.0 parts by mass or more is not clear, but is believed to be as follows.

As described above, when the modified rubber material is mixed with rubber components including an isoprene-based rubber and a polybutadiene rubber, the formation of bonds between the modified rubber material and the polymers is promoted. Then, incorporating at least a predetermined amount of zinc oxide promotes the reaction to form bonds between the modified rubber material and the polymers. Accordingly, it is believed that the overall performance in terms of abrasion resistance and fuel economy during high speed running is further improved.

The rubber composition preferably contains a vulcanizing agent.

Examples of vulcanizing agents include those commonly used in the rubber industry, such as sulfur. Examples of sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The vulcanizing agents may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

In the rubber composition, the amount of vulcanizing agents (preferably sulfur) per 100 parts by mass of the rubber components is preferably 0.5 parts by mass or more, more preferably 1.0 parts by mass or more, still more preferably 1.5 parts by mass or more. The amount is also preferably 10.0 parts by mass or less, more preferably 7.0 parts by mass or less, still more preferably 5.5 parts by mass or less, particularly preferably 4.0 parts by mass or less. When the amount is within the range indicated above, the advantageous effect tends to be better achieved.

The rubber composition preferably contains a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators are preferred among these.

The vulcanization accelerators may be commercially available from Kawaguchi Chemical Industry Co., Ltd., Ouchi Shinko Chemical Industrial Co., Ltd., Rhein Chemie, etc.

In the rubber composition, the amount of vulcanization accelerators per 100 parts by mass of the rubber components is preferably 0.5 parts by mass or more, more preferably 1.5 part by mass or more, still more preferably 2.5 parts by mass or more, but is preferably 10.0 parts by mass or less, more preferably 5.0 parts by mass or less, still more preferably 4.0 parts by mass or less. When the amount is within the range indicated above, the advantageous effect tends to be better achieved.

The rubber composition preferably contains stearic acid.

The stearic acid used may be a conventional one. Usable commercial products are available from, for example, NOF Corporation, Kao Corporation, FUJIFILM Wako Pure Chemical Corporation, Chiba Fatty Acid Co., Ltd., etc.

In the rubber composition, the amount of stearic acid per 100 parts by mass of the rubber components is preferably 1.0 parts by mass or more, more preferably 3.0 parts by mass or more, still more preferably 4.0 parts by mass or more. The amount is also preferably 8.0 parts by mass or less, more preferably 6.0 parts by mass or less, still more preferably 5.0 parts by mass or less. When the amount is within the range indicated above, the advantageous effect tends to be better achieved.

The rubber composition may contain an antioxidant.

Examples of antioxidants include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine or quinoline antioxidants, with p-phenylenediamine antioxidants being more preferred.

The antioxidants may be commercially available from, for example, Seiko Chemical Co., Ltd., Sumitomo Chemical Co., Ltd., Ouchi Shinko Chemical Industrial Co., Ltd., Flexsys, etc.

In the rubber composition, the amount of antioxidants per 100 parts by mass of the rubber components is preferably 1.0 parts by mass or more, more preferably 1.5 parts by mass or more, still more preferably 2.0 parts by mass or more, but is preferably 10.0 parts by mass or less, more preferably 5.0 parts by mass or less, still more preferably 4.0 parts by mass or less. When the amount is within the range indicated above, the advantageous effect tends to be better achieved.

The rubber composition may contain a wax.

Non-limiting examples of waxes include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more.

The waxes may be commercially available from Ouchi Shinko Chemical Industrial Co., Ltd., Nippon Seiro Co., Ltd., Seiko Chemical Co., Ltd., etc.

In the rubber composition, the amount of waxes per 100 parts by mass of the rubber components is preferably 0.5 parts by mass or more, more preferably 1.5 parts by mass or more, still more preferably 2.0 parts by mass or more. The amount is also preferably 10.0 parts by mass or less, more preferably 7.0 parts by mass or less, still more preferably 5.0 parts by mass or less. When the amount is within the range indicated above, the advantageous effect tends to be better achieved.

In addition to the above-mentioned components, the rubber composition may contain additives commonly used in the tire industry, such as vulcanizing agents other than sulfur (for example, organic crosslinking agents, organic peroxides). The amounts of these components are each preferably 0.1 parts by mass or more, but preferably 200 parts by mass or less, per 100 parts by mass of the rubber components.

To better achieve the advantageous effect, the rubber composition desirably satisfies the following relationship with respect to the ratio of the amount of modified rubber materials functionalized with thiuram sulfide compounds to the amount of isoprene-based rubbers [(the modified rubber material content (parts by mass) of the rubber composition)/(the isoprene-based rubber content (parts by mass) of the rubber composition)]:

Modified rubber material content/Isoprene-based rubber content $\leq$ 0.60.

The ratio of "Modified rubber material content/Isoprene-based rubber content" is preferably 0.50 or lower, more preferably 0.43 or lower, still more preferably 0.38 or lower, particularly preferably 0.33 or lower. The lower limit of the ratio is not limited, but is preferably 0.10 or higher, more preferably 0.15 or higher, still more preferably 0.20 or higher, particularly preferably 0.25 or higher.

The mechanism (reason) for this advantageous effect is not clear, but is believed to be as follows.

When the ratio of the modified rubber material content to the isoprene-based rubber content, in particular, the ratio of the modified reclaimed rubber content to the isoprene-based rubber content, is increased, the modified reclaimed rubber has a larger contribution in the resulting rubber, possibly impairing abrasion resistance. However, such a concern can be reduced by adjusting the ratio to a predetermined value or less. Accordingly, it is believed that the overall performance in terms of abrasion resistance and fuel economy during high speed running is further improved.

To better achieve the advantageous effect, the rubber composition desirably satisfies the following relationship with respect to the ratio of the amount of silica to the amount of modified rubber materials functionalized with thiuram sulfide compounds [(the silica content (parts by mass) of the rubber composition)/(the modified rubber material content (parts by mass) of the rubber composition)]:

$$\text{Silica content/Modified rubber material content} \geq 2.0.$$

The ratio of "Silica content/Modified rubber material content" is preferably 2.5 or higher, more preferably 2.8 or higher, still more preferably 3.1 or higher, particularly preferably 3.3 or higher. The upper limit of the ratio is not limited, but is preferably 7.0 or lower, more preferably 5.0 or lower, still more preferably 4.5 or lower, particularly preferably 4.0 or lower.

The mechanism (reason) for this advantageous effect is not clear, but is believed to be as follows.

It is considered that dispersing the silica around the modified rubber material, in particular, the modified reclaimed rubber, can reinforce the resulting entire rubber, thereby inhibiting fracture initiated from the interface. Accordingly, it is believed that the overall performance in terms of abrasion resistance and fuel economy during high speed running is further improved.

The rubber composition may be prepared, for example, by kneading the above-described components using a rubber kneading machine such as an open roll or a Banbury mixer, and then vulcanizing the kneaded mixture.

The kneading conditions are as follows: in a base kneading step of kneading additives other than crosslinking agents (vulcanizing agents) and vulcanization accelerators, the kneading temperature is usually 100 to 180°C, preferably 120 to 170°C, while in a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by press vulcanization, for example. The vulcanization temperature is usually 140 to 190°C, preferably 150 to 185°C.

In particular, in order to better achieve the advantageous effect, the rubber composition is preferably prepared from a mixture containing: at least one selected from the group consisting of an isoprene-based rubber and a polybutadiene rubber; and a modified rubber material functionalized with a thiuram sulfide compound, more preferably a mixture containing the isoprene-based rubber and the modified rubber material.

The mechanism (reason) for this advantageous effect is not clear, but is believed to be as follows.

As described above, when the modified rubber material is mixed with rubber components including an isoprene-based rubber and a polybutadiene rubber, the formation of bonds between the modified rubber material and the polymers is promoted. Further, when the modified rubber material is previously mixed sufficiently with the isoprene-based rubber and/or BR to prepare a mixture (masterbatch) containing the modified rubber material and the isoprene-based rubber and/or BR, these components are more uniformly mixed, which increases the efficiency of the reaction to form bonds between the modified rubber material and the polymers. Accordingly, it is believed that the overall performance in terms of abrasion resistance and fuel economy during high speed running is further improved.

The rubber composition prepared from the mixture may be prepared by, for example, a method including:

a step 1 of kneading at least one selected from the group consisting of an isoprene-based rubber and BR with a modified rubber material functionalized with a thiuram sulfide compound;
a step 2 of kneading a first kneaded mixture obtained in the step 1 with silica; and
a step 3 of kneading a second kneaded mixture obtained in the step 2 with a vulcanizing agent.

In the step 1 in which at least one selected from the group consisting of an isoprene-based rubber and BR is kneaded with the modified rubber material, other components may also be introduced and kneaded. A first kneaded mixture containing the at least one selected from the group consisting of an isoprene-based rubber and BR and the modified rubber material is prepared in the step 1. Desirably, the isoprene-based rubber and the modified rubber material are kneaded in the step 1.

The isoprene-based rubber, BR, and modified rubber material may each be completely (the total amount used in all the steps) or partially introduced in the step 1. When the isoprene-based rubber and/or BR and the modified rubber material are kneaded in the step 1, preferably each component is completely introduced and kneaded in the step 1 in order to better achieve the advantageous effect.

The kneading machine used in the step 1 is preferably an internal Banbury mixer. The rotor of the Banbury mixer may be either in a tangential or intermeshing form. The kneading temperature in the step 1 is preferably 100 to 180°C, more preferably 120 to 170°C.

In the step 2 in which the first kneaded mixture obtained in the step 1 is kneaded with silica, other components may also be introduced and kneaded. Examples of such other components in the step 2 include silane coupling agents, carbon black, plasticizers, stearic acid, antioxidants, and zinc oxide. A second kneaded mixture containing the isoprene-based rubber and/or BR, the modified rubber material, and the silica is prepared in the step 2.

The silica may be completely (the total amount used in all the steps) or partially introduced in the step 2. Preferably, the silica is completely introduced and kneaded in the step 2 in order to better achieve the advantageous effect.

The kneading machine used in the step 2 may be, for example, as described in the step 1.

The kneading temperature in the step 2 is preferably 100 to 180°C, more preferably 120 to 170°C.

In the step 3 in which the second kneaded mixture obtained in the step 2 is kneaded with a vulcanizing agent, other components may also be introduced and kneaded. Examples of such other components in the step 3 include vulcanization accelerators. A third kneaded mixture containing the isoprene-based rubber and/or BR, the modified rubber material, the silica, and the vulcanizing agent is prepared in the step 3. Then, a vulcanized rubber composition may be prepared, for example, by vulcanizing the third kneaded mixture obtained in the step 3.

The vulcanizing agent may be completely (the total amount used in all the steps) or partially introduced in the step 3. Preferably, the vulcanizing agent is completely introduced and kneaded in the step 3 in order to better achieve the advantageous effect.

The kneading machine used in the step 3 may be, for example, as described in the step 1.

The kneading temperature in the step 3 is preferably 120°C or lower, more preferably 80 to 110°C.

To better achieve the advantageous effect, the rubber composition (vulcanized rubber composition) preferably has an acetone extractable content (AE content) of 10.0% by mass or higher based on the total rubber composition (100% by mass). The acetone extractable content is more preferably 13.0% by mass or higher, still more preferably 15.0% by mass or higher, particularly preferably 16.0% by mass or higher. The upper limit is not limited, but is preferably 25.0% by mass or lower, more preferably 22.0% by mass or lower, still more preferably 20.0% by mass or lower.

Here, the acetone extractable content (AE content) is measured as described in EXAMPLES.

The mechanism (reason) why this advantageous effect is achieved by increasing the AE content, in particular, by adjusting the AE content to 15.0% by mass or higher is not clear, but is believed to be as follows.

As described above, when the modified rubber material is mixed with rubber components including an isoprene-based rubber and a polybutadiene rubber, the formation of bonds between the modified rubber material and the polymers is promoted. Then, when the AE content is increased, for example, by increasing the plasticizer content, the modified rubber material and the rubber components including an isoprene-based rubber and a polybutadiene rubber are more uniformly mixed, which increases the efficiency of the reaction to form bonds between the modified rubber material and the polymers. Accordingly, it is believed that the overall performance in terms of abrasion resistance and fuel economy during high speed running is further improved.

To better achieve the advantageous effect, the rubber composition desirably satisfies the following relationship with respect to the isoprene-based rubber percentage (the percentage (% by mass) of isoprene-based rubbers in the rubber composition (100% by mass)) and the AE content (the acetone extractable content (% by mass) in the vulcanized rubber composition (100% by mass)):

$$\text{Isoprene-based rubber percentage} \times \text{AE content} \geq 250.$$

The value of "Isoprene-based rubber percentage × AE content" is preferably 300 or more, more preferably 350 or more, still more preferably 380 or more, particularly preferably 400 or more. The upper limit is not limited, but is preferably 800 or less, more preferably 700 or less, still more preferably 600 or less.

The mechanism (reason) for this advantageous effect is not clear, but is believed to be as follows.

As described above, when the modified rubber material is mixed with rubber components including an isoprene-based rubber and a polybutadiene rubber, the formation of bonds between the modified rubber material and the polymers is promoted. Then, when the AE content is increased, for example, by increasing the plasticizer content, the modified rubber material and the rubber components including an isoprene-based rubber and a polybutadiene rubber are more uniformly mixed, which increases the efficiency of the reaction to form bonds between the modified rubber material and the polymers. In addition, increasing the isoprene-based rubber percentage inhibits localization of silica in the isoprene-based rubber. Accordingly, it is believed that the overall performance in terms of abrasion resistance and fuel economy during high speed running is further improved.

To better achieve the advantageous effect, the rubber composition (vulcanized rubber composition) desirably satisfies the following relationship with respect to the silica percentage (% by mass) and AE content (% by mass) in the rubber composition (100% by mass):

$$\text{Silica percentage} \times \text{AE content} \geq 400.$$

The value of "Silica percentage × AE content" is preferably 450 or more, more preferably 500 or more, still more preferably 550 or more, particularly preferably 580 or more. The upper limit is not limited, but is preferably 1000 or less, more preferably 800 or less, still more preferably 700 or less.

The mechanism (reason) for this advantageous effect is not clear, but is believed to be as follows.

As described above, when the modified rubber material is mixed with rubber components including an isoprene-based rubber and a polybutadiene rubber, the formation of bonds between the modified rubber material and the polymers is promoted. Then, when the AE content is increased, for example, by increasing the plasticizer content, the modified rubber material and the rubber components including an isoprene-based rubber and a polybutadiene rubber are more uniformly mixed, which increases the efficiency of the reaction to form bonds between the modified rubber material and the polymers. In addition, increasing the silica percentage enhances reinforcement, thereby improving abrasion resistance. Accordingly, it is believed that the overall performance in terms of abrasion resistance and fuel economy during high speed running is further improved.

The rubber composition may be used in tire components (as a tire rubber composition), for example. In particular, it is suitable for use in treads (cap treads).

The tire of the present invention can be produced from the above-described rubber composition by usual methods. Specifically, the unvulcanized rubber composition containing various additives as needed may be extruded into the shape of a tire component such as tread and then formed and assembled with other tire components in a usual manner on a tire building machine to build an unvulcanized tire, which may then be heated and pressurized in a vulcanizer to produce a tire.

Non-limiting examples of the tire include pneumatic tires, solid tires, and airless tires. Pneumatic tires are preferred among these.

The tire may be used as a passenger car tire, a large passenger car tire, a large SUV tire, a heavy duty tire (e.g., truck and bus tire), a two-wheeled vehicle tire, a racing tire, a winter tire (studless winter tire, snow tire, cold weather tire, studded tire), an all-season tire, a run-flat tire, an aircraft tire, a mining tire, etc.

EXAMPLES

The present invention will be specifically described with reference to, but not limited to, examples.

The chemicals used in the examples and comparative examples are listed below.

NR: TSR20

BR: BR150B (cis content: 98% by mass) available from Ube Industries, Ltd.

Modified rubber material: EkoDyne (modified reclaimed rubber functionalized with tetrabenzylthiuram disulfide, degree of modification: 5.0% or higher) available from Lehigh Technologies

Modified rubber material/NR masterbatch 1: the product prepared in the production example below (modified rubber material:NR = 30:70)

Modified rubber material/NR masterbatch 2: the product prepared in the production example below (modified rubber material:NR = 35:65)

Modified rubber material/NR masterbatch 3: the product prepared in the production example below (modified rubber material:NR = 25:75)

Reclaimed rubber (non-modified): R-500 available from Muraoka Rubber Reclaiming Co., Ltd.

Reclaimed rubber/NR masterbatch 1: the product prepared in the production example below (reclaimed rubber:NR = 30:70)

Silica: ULTRASIL VN3 ($N_2SA$: 175 $m^2$/g) available from Evonik-Degussa

Carbon black: SHOBLACK N220 ($N_2SA$: 111 $m^2$/g) available from Cabot Japan K.K.

Silane coupling agent: Si266 (bis(3-triethoxysilylpropyl)disulfide) available from Evonik-Degussa

Oil: NH-60 available from Idemitsu Kosan Co., Ltd.

Zinc oxide: zinc oxide #2 available from Mitsui Mining & Smelting Co., Ltd.

Antioxidant: Antigene 6C (N-(1,3-dimethylbutyl)-N'-phenyl-p-phenylenediamine) available from Sumitomo Chemical Co., Ltd.

Stearic acid: stearic acid "TSUBAKI" available from NOF Corporation

Wax: Ozoace 0355 available from Nippon Seiro Co., Ltd.

Sulfur: HK-200-5 (5% oil-containing powdered sulfur) available from Hosoi Chemical Industry Co., Ltd.

Vulcanization accelerator DPG: NOCCELER D (diphenylguanidine) available from Ouchi Shinko Chemical Industrial Co., Ltd.

Vulcanization accelerator CZ: NOCCELER CZ (N-cyclohexyl-2-benzothiazolylsulfenamide) available from Ouchi Shinko Chemical Industrial Co., Ltd.

(Production Example: Preparation of masterbatch)

The NR and the modified rubber material or the reclaimed rubber (non-modified) according to the formulation recipe shown in Table 1 were kneaded using a Banbury mixer. Thus, modified rubber material/NR masterbatches 1 to 3 and a reclaimed rubber/NR masterbatch 1 were prepared.

(Examples and Comparative Examples)

The chemicals other than the sulfur and vulcanization accelerators according to the formulation recipe shown in Table 1 were kneaded using a Banbury mixer to give a kneaded mixture. Then, the sulfur and vulcanization accelerators were kneaded into the kneaded mixture using an open roll mill to give an unvulcanized rubber composition. The unvulcanized rubber composition was formed into a tread shape and assembled with other tire components to build an unvulcanized tire. The unvulcanized tire was press-vulcanized at 170°C for 10 minutes to prepare a test tire (size: 195/65R15, passenger car tire). The test tires prepared as above were tested as described below.

The test tires were evaluated as described below. Table 1 shows the evaluation results. It should be noted that Comparative Example 1 is used as a standard of comparison in Table 1.

(Acetone extractable content (AE content))

The amount of substances extracted with acetone from a rubber specimen cut out of the tread of each test tire was measured by a method of measuring the acetone extractable content in accordance with JIS K 6229.

Acetone extractable content (% by mass) = (Mass of sample before extraction - Mass of sample after extraction)/Mass of sample before extraction $\times$ 100

(Abrasion resistance during high speed running)

The test tires were mounted on a car. After 50,000 km driving at an average speed of 100 km/h, the groove depth in the tread portion was measured. The wear amount of the tread portion was calculated from the measured depth and expressed as an index relative to that of the evaluation standard taken as 100. A higher index indicates a smaller wear amount and thus better abrasion resistance.

(Fuel economy during high speed running)

The rolling resistance of each test tire running at 100 km/h was measured using a rolling resistance tester and expressed as an index relative to that of the evaluation standard taken as 100. A higher index indicates a smaller rolling resistance and thus better fuel economy.

[Table 1]

Table 1

| | | Example | | | | | | | | | | | | | | Comparative Example | | | | | | |
|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 | 4 | 5 | 6 | 7 |
| Formulation (parts by mass) | NR | 70 | 30 | 30 | 30 | 65 | 35 | 35 | 35 | 75 | 25 | 25 | 25 | 30 | 30 | 70 | 45 | 70 | 30 | 30 | 30 | 45 |
| | BR | 30 | 30 | 30 | 30 | 35 | 35 | 35 | 35 | 25 | 25 | 25 | 25 | 30 | 30 | 30 | 55 | 30 | 30 | 30 | 30 | 55 |
| | Modified rubber material | 30 | | | | 35 | | | | 25 | | | | | | | 30 | 30 | | | | |
| | Modified rubber material/NR masterbatch 1 (Modified rubber material: NR = 30 : 70) | | 100 | 100 | 100 | | | | | | | | | 100 | 100 | | | | | | | |
| | Modified rubber material/NR masterbatch 2 (Modified rubber material: NR = 35 : 65) | | | | | | 100 | 100 | 100 | | | | | | | | | | | | | |
| | Modified rubber material/NR masterbatch 3 (Modified rubber material: NR = 25 : 75) | | | | | | | | | | 100 | 100 | 100 | | | | | | | | | |
| | Reclaimed rubber (non-modified) | | | | | | | | | | | | | | | | | | | 100 | 100 | 30 |
| | Reclaimed rubber/NR masterbatch 1 (Reclaimed rubber: NR = 30 : 70) | | | | | | | | | | | | | | | 30 | | | 100 | | | |
| | Silica | 100 | 100 | 100 | 100 | 100 | 100 | 100 | 100 | 100 | 100 | 100 | 100 | 80 | 120 | 100 | 100 | 20 | 100 | 100 | 100 | 100 |
| | Carbon black | 5 | 5 | 5 | 5 | 5 | 5 | 5 | 5 | 5 | 5 | 5 | 5 | 5 | 5 | 5 | 5 | 85 | 5 | 5 | 5 | 5 |
| | Silane coupling agent | 8 | 8 | 8 | 8 | 8 | 8 | 8 | 8 | 8 | 8 | 8 | 8 | 8 | 8 | 8 | 8 | 8 | 8 | 8 | 8 | 8 |
| | Oil | 5 | 5 | 12 | 12 | 5 | 5 | 12 | 12 | 5 | 12 | 12 | 12 | 12 | 12 | 5 | 5 | 5 | 5 | 12 | 12 | 5 |
| | Zinc oxide | 1.5 | 1.5 | 1.5 | 2.5 | 1.5 | 1.5 | 1.5 | 2.5 | 1.5 | 1.5 | 1.5 | 2.5 | 2.5 | 2.5 | 1.5 | 1.5 | 1.5 | 1.5 | 1.5 | 2.5 | 1.5 |
| | Antioxidant | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Stearic acid | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | Wax | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator DPG | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator CZ | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | AE content (% by mass) | 12.0 | 12.0 | 16.0 | 16.0 | 12.0 | 12.0 | 12.0 | 12.0 | 12.0 | 12.0 | 12.0 | 12.0 | 13.0 | 11.0 | 12.0 | 12.0 | 12.0 | 12.0 | 16.0 | 16.0 | 12.0 |
| Physical properties/Evaluation | Isoprene-based rubber percentage × AE content | 321 | 321 | 417 | 416 | 293 | 293 | 285 | 284 | 351 | 351 | 342 | 340 | 365 | 266 | 321 | 207 | 321 | 321 | 417 | 416 | 207 |
| | Silica percentage × AE content | 459 | 459 | 596 | 594 | 450 | 450 | 439 | 437 | 468 | 468 | 455 | 454 | 417 | 456 | 459 | 459 | 92 | 459 | 596 | 594 | 459 |
| | Isoprene-based rubber content/Polybutadiene rubber content | 2.3 | 2.3 | 2.3 | 2.3 | 1.9 | 1.9 | 1.9 | 1.9 | 3.0 | 3.0 | 3.0 | 3.0 | 2.3 | 2.3 | 2.3 | 0.8 | 2.3 | 2.3 | 2.3 | 2.3 | 0.8 |
| | Modified rubber material content/Isoprene-based rubber content | 0.43 | 0.43 | 0.43 | 0.43 | 0.54 | 0.54 | 0.54 | 0.54 | 0.33 | 0.33 | 0.33 | 0.33 | 0.43 | 0.43 | | 0.67 | 0.43 | | | | |
| | Silica content/Modified rubber material content | 3.3 | 3.3 | 3.3 | 3.3 | 2.9 | 2.9 | 2.9 | 2.9 | 4.0 | 4.0 | 4.0 | 4.0 | 2.7 | 4.0 | | 3.3 | 0.7 | | | | |
| | Abrasion resistance during high speed running | 110 | 115 | 120 | 125 | 105 | 110 | 115 | 120 | 115 | 120 | 125 | 130 | 115 | 110 | 100 | 95 | 105 | 100 | 100 | 105 | 80 |
| | Fuel economy during high speed running | 100 | 105 | 110 | 115 | 105 | 110 | 110 | 115 | 100 | 105 | 110 | 115 | 105 | 95 | 100 | 90 | 85 | 100 | 95 | 95 | 100 |

Table 1 shows that excellent overall performance in terms of abrasion resistance and fuel economy during high speed running (as expressed by the sum of two indices of abrasion resistance during high speed running and fuel economy during high speed running) was exhibited by the examples which contained rubber components including an isoprene-based rubber and BR, silica, and a modified rubber material functionalized with a thiuram sulfide compound, had a predetermined silica content, and satisfied relationship (1).

Moreover, Comparative Examples 7, 1, and 2 and Example 1 demonstrate that when the use of the modified rubber material is combined with the satisfaction of relationship (1), the overall performance in terms of abrasion resistance and fuel economy during high speed running was synergistically improved.

Exemplary embodiments of the present invention include:

Embodiment 1. A tire, including a rubber composition,

> the rubber composition containing: rubber components including an isoprene-based rubber and a polybutadiene rubber; silica; and a modified rubber material functionalized with a thiuram sulfide compound,
> the rubber composition having a silica content of 30 to 150 parts by mass per 100 parts by mass of the rubber components,
> the rubber composition satisfying the following relationship (1) with respect to an isoprene-based rubber content and a polybutadiene rubber content:

> Isoprene-based rubber content > Polybutadiene rubber content.　　　　　　　　(1)

Embodiment 2. The tire according to Embodiment 1,
wherein the rubber composition is prepared from a mixture containing: at least one selected from the group consisting of the isoprene-based rubber and the polybutadiene rubber; and the modified rubber material.
Embodiment 3. The tire according to Embodiment 1 or 2,
wherein the rubber composition has an acetone extractable content (AE content) of 15% by mass or higher.
Embodiment 4. The tire according to any one of Embodiments 1 to 3,
wherein the rubber composition has a zinc oxide content of 2.0 parts by mass or more per 100 parts by mass of the rubber components.
Embodiment 5. The tire according to any one of Embodiments 1 to 4,
wherein the modified rubber material has a diene portion having a degree of modification with the thiuram sulfide compound of 5.0% or higher.
Embodiment 6. The tire according to any one of Embodiments 1 to 5,
wherein the rubber composition satisfies the following relationship with respect to the isoprene-based rubber content and the polybutadiene rubber content: Isoprene-based rubber content/Polybutadiene rubber content $\geq$ 2.0.
Embodiment 7. The tire according to any one of Embodiments 1 to 6,
wherein the rubber composition has a silica content of 80 parts by mass or more and a liquid plasticizer content of 10.0 parts by mass or more, each per 100 parts by mass of the rubber components.
Embodiment 8. The tire according to any one of Embodiments 1 to 7,
wherein the rubber composition satisfies the following relationship with respect to a ratio of a modified rubber material content to the isoprene-based rubber content:

Modified rubber material content/Isoprene-based rubber content $\leq$ 0.50.

Embodiment 9. The tire according to any one of Embodiments 1 to 8,
wherein the rubber composition satisfies the following relationship with respect to a ratio of the silica content to a modified rubber material content:

`Silica content/Modified rubber material content ≥ 3.1.`

Embodiment 10. The tire according to any one of Embodiments 3 to 9,
wherein the rubber composition satisfies the following relationship with respect to an isoprene-based rubber percentage and the AE content:

`Isoprene-based rubber percentage × AE content ≥ 350.`

Embodiment 11. The tire according to any one of Embodiments 3 to 10,
wherein the rubber composition satisfies the following relationship with respect to a silica percentage (% by mass) and the AE content (% by mass):

$$\text{Silica percentage} \times \text{AE content} \geq 500.$$

Provided are a rubber composition and a tire which provide improved overall performance including excellent abrasion resistance and fuel economy during high speed running. Included is a rubber composition which contains: rubber components including an isoprene-based rubber and a polybutadiene rubber; silica; and a modified rubber material functionalized with a thiuram sulfide compound, has a silica content of 30 to 150 parts by mass per 100 parts by mass of the rubber components, and satisfies the following relationship (1) with respect to the isoprene-based rubber content and the polybutadiene rubber content:

Isoprene-based rubber content > Polybutadiene rubber content. (1)

**Claims**

1. A tire, comprising a rubber composition,

   the rubber composition comprising: rubber components including an isoprene-based rubber and a polybutadiene rubber; silica; and a modified rubber material functionalized with a thiuram sulfide compound,
   the rubber composition having a silica content of 30 to 150 parts by mass per 100 parts by mass of the rubber components,
   the rubber composition satisfying the following relationship (1) with respect to an isoprene-based rubber content by mass and a polybutadiene rubber content by mass:

   (1) Isoprene-based rubber content > Polybutadiene rubber content.

2. The tire according to claim 1,
   wherein the rubber composition is prepared from a mixture comprising: at least one selected from the group consisting of the isoprene-based rubber and the polybutadiene rubber; and the modified rubber material.

3. The tire according to claim 1 or 2,
   wherein the rubber composition has an acetone extractable content (AE content) of 15.0% by mass or higher, wherein the AE content is measured in accordance with JIS K 6229.

4. The tire according to any one of claims 1 to 3,
   wherein the rubber composition has a zinc oxide content of 2.0 parts by mass or more per 100 parts by mass of the rubber components.

5. The tire according to any one of claims 1 to 4,
   wherein the modified rubber material has a diene portion having a degree of modification with the thiuram sulfide compound of 5.0% or higher.

6. The tire according to any one of claims 1 to 5,
   wherein the rubber composition satisfies the following relationship with respect to the isoprene-based rubber content by mass and the polybutadiene rubber content by mass:

   Isoprene-based rubber content/Polybutadiene rubber content ≥ 2.0.

7. The tire according to any one of claims 1 to 6,
   wherein the rubber composition has a silica content of 80 parts by mass or more and a liquid plasticizer content of 10.0 parts by mass or more, each per 100 parts by mass of the rubber components.

8. The tire according to any one of claims 1 to 7,
wherein the rubber composition satisfies the following relationship with respect to a ratio by mass of a modified rubber material content to the isoprene-based rubber content:

$$\text{Modified rubber material content/Isoprene-based rubber content} \leq 0.50.$$

9. The tire according to any one of claims 1 to 8,
wherein the rubber composition satisfies the following relationship with respect to a ratio by mass of the silica content to a modified rubber material content:

$$\text{Silica content/Modified rubber material content} \geq 3.1.$$

10. The tire according to any one of claims 3 to 9,
wherein the rubber composition satisfies the following relationship with respect to an isoprene-based rubber percentage by mass and the AE content by mass:

$$\text{Isoprene-based rubber percentage} \times \text{AE content} \geq 350.$$

11. The tire according to any one of claims 3 to 10,
wherein the rubber composition satisfies the following relationship with respect to a silica percentage (% by mass) and the AE content (% by mass):

$$\text{Silica percentage} \times \text{AE content} \geq 500.$$

12. The tire according to any one of claims 1 to 11,
wherein the amount of isoprene-based rubbers based on 100% by mass of the rubber components is 50% by mass or more, more preferably 60% by mass or more, still more preferably 70% by mass or more, particularly preferably 75% by mass or more.

13. The tire according to any one of claims 1 to 12,

wherein the amount of polybutadiene rubber based on 100% by mass of the rubber components is 5% by mass or more, more preferably 10% by mass or more, still more preferably 15% by mass or more, particularly preferably 20% by mass or more, and
the amount of polybutadiene rubber based on 100% by mass of the rubber components is 45% by mass or less, more preferably 40% by mass or less, still more preferably 30% by mass or less, particularly preferably 25% by mass or less.

14. The tire according to any one of claims 1 to 13,
wherein the polybutadiene rubber is high-cis polybutadiene rubber, polybutadiene rubber containing syndiotactic polybutadiene crystals, and/or polybutadiene rubber synthesized using rare earth catalysts, preferably high-cis polybutadiene rubber having a cis content of 90% or higher.

15. The tire according to any one of claims 1 to 14,
wherein the rubber composition contains rubber components other than isoprene-based rubbers and polybutadiene rubber, such as butyl-based rubbers, fluororubbers and/or other diene rubbers including styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR).

**Patentansprüche**

1. Reifen, der eine Kautschukzusammensetzung umfasst,

wobei die Kautschukzusammensetzung umfasst: Kautschukbestandteile einschließlich eines Kautschuks auf Isoprenbasis und eines Polybutadienkautschuks; Siliciumoxid; und ein modifiziertes Kautschukmaterial, das mit einer Thiuramsulfidverbindung funktionalisiert ist,

wobei die Kautschukzusammensetzung einen Siliciumoxidgehalt von 30 bis 150 Masseteilen pro 100 Masseteile der Kautschukbestandteile aufweist,

wobei die Kautschukzusammensetzung die folgende Beziehung (1) in Bezug auf einen Massengehalt an Kautschuk auf Isoprenbasis und einen Massengehalt an Polybutadienkautschuk erfüllt:

Gehalt an Kautschuk auf Isoprenbasis > Gehalt an Polybutadienkautschuk.　　　　　　　(1)

2.　Reifen nach Anspruch 1,
wobei die Kautschukzusammensetzung aus einem Gemisch hergestellt ist, das umfasst: mindestens eines ausgewählt aus der Gruppe bestehend aus dem Kautschuk auf Isoprenbasis und dem Polybutadienkautschuk; und das modifizierte Kautschukmaterial.

3.　Reifen nach Anspruch 1 oder 2,
wobei die Kautschukzusammensetzung einen Gehalt an mit Aceton extrahierbarem Material (AE-Gehalt) von 15,0 Masse-% oder mehr aufweist, wobei der AE-Gehalt gemäß JIS K 6229 gemessen wird.

4.　Reifen nach einem der Ansprüche 1 bis 3,
wobei die Kautschukzusammensetzung einen Zinkoxidgehalt von 2,0 Masseteilen oder mehr pro 100 Masseteile der Kautschukbestandteile aufweist.

5.　Reifen nach einem der Ansprüche 1 bis 4,
wobei das modifizierte Kautschukmaterial einen Dienanteil mit einem Modifikationsgrad mit der Thiuramsulfidverbindung von 5,0 % oder mehr aufweist.

6.　Reifen nach einem der Ansprüche 1 bis 5,
wobei die Kautschukzusammensetzung die folgende Beziehung in Bezug auf den Massengehalt an Kautschuk auf Isoprenbasis und den Massengehalt an Polybutadienkautschuk erfüllt:

Gehalt an Kautschuk auf Isoprenbasis / Gehalt an Polybutadienkautschuk $\geq$ 2,0.

7.　Reifen nach einem der Ansprüche 1 bis 6,
wobei die Kautschukzusammensetzung einen Siliciumoxid-Gehalt von 80 Massenteilen oder mehr und einen Gehalt an flüssigem Weichmacher von 10,0 Massenteilen oder mehr, jeweils pro 100 Massenteile der Kautschukbestandteile, aufweist.

8.　Reifen nach einem der Ansprüche 1 bis 7,
wobei die Kautschukzusammensetzung die folgende Beziehung in Bezug auf das Massenverhältnis des Gehalts an modifiziertem Kautschukmaterial zum Gehalt an Kautschuk auf Isoprenbasis erfüllt:

Gehalt an modifiziertem Kautschukmaterial/Gehalt an Kautschuk auf Isoprenbasis $\leq$ 0,50.

9.　Reifen nach einem der Ansprüche 1 bis 8,
wobei die Kautschukzusammensetzung die folgende Beziehung in Bezug auf das Massenverhältnis des Siliciumoxidgehalts zum Gehalt an modifiziertem Kautschukmaterial erfüllt:

$$\text{Siliciumoxidgehalt/Gehalt an modifiziertem Kautschukmaterial} \geq 3,1.$$

10.　Reifen nach einem der Ansprüche 3 bis 9,
wobei die Kautschukzusammensetzung die folgende Beziehung in Bezug auf einen prozentualen Massenanteil an Kautschuk auf Isoprenbasis und den Massenanteil an AE erfüllt:

prozentualer Massenanteil an Kautschuk auf Isoprenbasis $\times$ AE-Gehalt $\geq$ 350.

**11.** Reifen nach einem der Ansprüche 3 bis 10,
wobei die Kautschukzusammensetzung die folgende Beziehung in Bezug auf einen Siliciumoxid-Prozentsatz (Masse-%) und den AE-Gehalt (Masse-%) erfüllt:

$$\text{Siliciumoxid-Prozentsatz} \times \text{AE-Gehalt} \geq 500.$$

**12.** Reifen nach einem der Ansprüche 1 bis 11,
wobei die Menge an Kautschuken auf Isoprenbasis, bezogen auf 100 Masse-% der Kautschukbestandteile, 50 Masse-% oder mehr, bevorzugter 60 Masse-% oder mehr, noch bevorzugter 70 Masse-% oder mehr, besonders bevorzugt 75 Masse-% oder mehr beträgt.

**13.** Reifen nach einem der Ansprüche 1 bis 12,

wobei die Menge an Polybutadien-Kautschuk, bezogen auf 100 Masse-% der Kautschukbestandteile, 5 Masse-% oder mehr, bevorzugter 10 Masse-% oder mehr, noch bevorzugter 15 Masse-% oder mehr, besonders bevorzugt 20 Masse-% oder mehr beträgt, und
die Menge an Polybutadien-Kautschuk, bezogen auf 100 Masse-% der Kautschukbestandteile, 45 Masse-% oder weniger, bevorzugter 40 Masse-% oder weniger, noch bevorzugter 30 Masse-% oder weniger, besonders bevorzugt 25 Masse-% oder weniger beträgt.

**14.** Reifen nach einem der Ansprüche 1 bis 13,
wobei der Polybutadien-Kautschuk ein Hoch-Cis-Polybutadien-Kautschuk, ein Polybutadien-Kautschuk, der syndiotaktische Polybutadien-Kristalle enthält, und/oder ein Polybutadien-Kautschuk ist, der unter Verwendung von Seltenerd-Katalysatoren synthetisiert wurde, vorzugsweise ein Hoch-Cis-Polybutadien-Kautschuk mit einem cis-Gehalt von 90 % oder mehr.

**15.** Reifen nach einem der Ansprüche 1 bis 14,
wobei die Kautschukzusammensetzung andere Kautschukbestandteile als Kautschuke auf Isoprenbasis und Polybutadienkautschuk enthält, wie etwa Kautschuke auf Butylbasis, Fluorkautschuke und/oder andere Dienkautschuke einschließlich Styrol-Butadien-Kautschuke (SBR), Styrol-Isopren-Butadien-Kautschuke (SIBR), Ethylen-Propylen-Dien-Kautschuke (EPDM), Chloroprenkautschuke (CR) und Acrylnitril-Butadien-Kautschuke (NBR).

**Revendications**

**1.** Pneu, comprenant une composition de caoutchouc,

la composition de caoutchouc comprenant : des composants caoutchouc comprenant un caoutchouc à base d'isoprène et un caoutchouc polybutadiène ; de la silice ; et un matériau de caoutchouc modifié fonctionnalisé par un composé de sulfure de thiurame,
la composition de caoutchouc ayant une teneur de silice de 30 à 150 parties en masse par 100 parties en masse des composants caoutchouc,
la composition de caoutchouc satisfaisant la relation suivante (1) par rapport à une teneur en masse de caoutchouc à base d'isoprène et une teneur en masse de caoutchouc polybutadiène :

(1) Teneur de caoutchouc à base d'isoprène > teneur de caoutchouc polybutadiène.

**2.** Pneu selon la revendication 1,
dans lequel la composition de caoutchouc est préparée à partir d'un mélange comprenant : au moins un élément choisi dans le groupe constitué du caoutchouc à base d'isoprène et du caoutchouc polybutadiène ; et le matériau de caoutchouc modifié.

**3.** Pneu selon la revendication 1 ou 2,

dans lequel la composition de caoutchouc a une teneur extractible à l'acétone (teneur AE) de 15,0 % en masse ou plus, dans laquelle la teneur AE est mesurée selon la norme JIS K 6229.

4.  Pneu selon l'une quelconque des revendications 1 à 3,
    dans lequel la composition de caoutchouc a une teneur d'oxyde de zinc de 2,0 parties en masse ou plus par 100 parties en masse des composants caoutchouc.

5.  Pneu selon l'une quelconque des revendications 1 à 4,
    dans lequel le matériau de caoutchouc modifié a une partie diène ayant un degré de modification avec le composé de sulfure de thiurame de 5,0 % ou plus.

6.  Pneu selon l'une quelconque des revendications 1 à 5,
    dans lequel la composition de caoutchouc satisfait la relation suivante par rapport à la teneur en masse de caoutchouc à base d'isoprène et à la teneur en masse de caoutchouc polybutadiène : Teneur en caoutchouc à base d'isoprène/teneur en caoutchouc polybutadiène $\geq$ 2,0.

7.  Pneu selon l'une quelconque des revendications 1 à 6,
    dans lequel la composition de caoutchouc a une teneur de silice de 80 parties en masse ou plus et une teneur de plastifiant liquide de 10,0 parties en masse ou plus, chacune par 100 parties en masse des composants caoutchouc.

8.  Pneu selon l'une quelconque des revendications 1 à 7,
    dans lequel la composition de caoutchouc satisfait la relation suivante par rapport à un rapport en masse entre une teneur de matériau de caoutchouc modifié et la teneur de caoutchouc à base d'isoprène :

    Teneur en matériau de caoutchouc modifié/teneur en caoutchouc à base d'isoprène $\leq$ 0,50.

9.  Pneu selon l'une quelconque des revendications 1 à 8,
    dans lequel la composition de caoutchouc satisfait la relation suivante par rapport à un rapport en masse entre la teneur de silice et une teneur de matériau de caoutchouc modifié :

    Teneur de silice/teneur de matériau de caoutchouc modifié $\geq$ 3,1.

10. Pneu selon l'une quelconque des revendications 3 à 9,
    dans lequel la composition de caoutchouc satisfait la relation suivante par rapport à un pourcentage en masse de caoutchouc à base d'isoprène et la teneur AE en masse :

    Pourcentage de caoutchouc à base d'isoprène x teneur AE $\geq$ 350.

11. Pneu selon l'une quelconque des revendications 3 à 10,
    dans lequel la composition de caoutchouc satisfait la relation suivante par rapport à un pourcentage de silice (% en masse) et la teneur AE (% en masse) :

    Pourcentage de silice x teneur AE $\geq$ 500.

12. Pneu selon l'une quelconque des revendications 1 à 11,
    dans lequel la quantité de caoutchoucs à base d'isoprène sur la base de 100 % en masse des composants caoutchouc est de 50 % en masse ou plus, plus préférablement de 60 % en masse ou plus, encore plus préférablement de 70 % en masse ou plus, particulièrement préférablement de 75 % en masse ou plus.

13. Pneu selon l'une quelconque des revendications 1 à 12,

    dans lequel la quantité de caoutchouc polybutadiène sur la base de 100 % en masse des composants caoutchouc est de 5 % en masse ou plus, plus préférablement de 10 % en masse ou plus, encore plus préférablement de 15 % en masse ou plus, particulièrement préférablement de 20 % en masse ou plus, et la quantité de caoutchouc polybutadiène sur la base de 100 % en masse des composants de caoutchouc est de 45 % en masse ou moins, plus préférablement de 40 % en masse ou moins, encore plus préférablement de 30 % en masse ou moins, particulièrement préférablement de 25 % en masse ou moins.

14. Pneu selon l'une quelconque des revendications 1 à 13, dans lequel le caoutchouc polybutadiène est un caoutchouc polybutadiène à haute teneur en cis, le caoutchouc polybutadiène contenant des cristaux de polybutadiène syndiotactique, et/ou un caoutchouc polybutadiène synthétisé à l'aide de catalyseurs de terres rares, de préférence un caoutchouc polybutadiène à haute teneur en cis ayant une teneur en cis de 90 % ou plus.

15. Pneu selon l'une quelconque des revendications 1 à 14, dans lequel la composition de caoutchouc contient des composants caoutchouc autres que des caoutchoucs à base d'isoprène et du caoutchouc polybutadiène, tels que des caoutchoucs à base de butyle, des caoutchoucs fluorés et/ou d'autres caoutchoucs diéniques, y compris des caoutchoucs styrène-butadiène (SBR), des caoutchoucs styrène-isoprène-butadiène (SIBR), des caoutchoucs éthylène-propylène-diène (EPDM), des caoutchoucs chloroprène (CR) et des caoutchoucs acrylonitrile-butadiène (NBR).

**EP 4 116 337 B1**

**Patent documents cited in the description**

- JP 2019026757 A